# FASCICULE DE BREVET EUROPEEN

(11) **EP 2 303 729 B1**
(45) Date de publication et mention de la délivrance du brevet: **29.08.2012**
(21) Numéro de dépôt: 09737065.4
(22) Date de dépôt: 16.07.2009
(51) Int. Cl.: B65G 15/08, B65G 15/36, B65G 15/40

(54) **BANDE TRANSPORTEUSE SANS FIN ET DISPOSITIF CONVOYEUR LA COMPRENANT**
ENDLOSTRÄGERBAND FÜR FÖRDERSYSTEM UND DAMIT AUSGESTATTETES FÖRDERSYSTEM
ENDLESS CONVEYOR BELT AND CONVEYOR SYSTEM FITTED THEREWITH

(30) Priorité: 18.07.2008 FR 0804101
(43) Date de publication de la demande: 06.04.2011
(73) Titulaire: Liftvrac, 44310 St Colomban (FR)
(72) Inventeur: BOURSIER, Marcel, F-44310 St Colomban (FR)
(74) Mandataire: Michelet, Alain
(86) Numéro de dépôt international: PCT/FR2009/051411
(87) Numéro de publication internationale: WO 2010/007320

(56) Documents cités:
- WO-A-2004/037689
- FR-A- 2 531 934
- GB-A- 461 162
- GB-A- 473 117
- US-A- 2 199 935

## Description

La présente invention concerne le domaine général des installations de convoyage de produits par bande transporteuse sans fin. Elle concerne plus particulièrement les bandes transporteuses sans fin réalisées planes en matériau souple et qui intègrent des organes de renfort longitudinaux (câbles, sangles plates...) adaptés pour limiter leurs possibilités d'allongement longitudinal.

Dans les bandes transporteuses planes sans fin de ce genre, actuellement proposées sur le marché, les organes de renfort longitudinaux intégrés sont généralement répartis de manière homogène ou relativement homogène sur la largeur du corps plan de bande (voir par exemple le document EP-0 630 832 qui décrit une bande selon le préambule de la revendication 1).

Cependant, ces structures de bandes sans fin ne conviennent pas bien pour certaines configurations d'installations de convoyage, en particulier dans le cas où la bande, à l'origine plane, est conformée en auge ou en forme de tube sur une portion de l'installation, et qu'elle est soumise, sur cette portion, dans un plan perpendiculaire aux axes des rouleaux de renvoi d'extrémité, à une trajectoire non rectiligne (avec des angles ou des courbes).

Pour remédier à cet inconvénient, la présente invention propose de positionner les organes de renfort longitudinaux uniquement sur deux zones de la largeur du corps plan de bande, lesquelles zones sont situées à 1/4 ou approximativement à 1/4 de ladite largeur de bande, de part et d'autre du plan médian dudit corps plan de bande.

Les capacités d'allongement d'une telle bande sans fin sont limitées du fait de la présence des organes de renfort ; et lorsque cette bande est placée en configuration tubulaire ou sensiblement tubulaire, les organes de renfort peuvent être situés sur le plan médian du tube qui est parallèle à l'axe de déplacement, si l'axe médian de la bande est maintenu dans le plan médian vertical du tube, ce qui permet de limiter les contraintes internes lorsque cette structure tubulaire se déplace selon des trajectoires non rectilignes, notamment dans un plan perpendiculaire aux axes des rouleaux de renvoi d'extrémités.

De préférence, la bande transporteuse conforme à l'invention comprend deux groupes d'une pluralité d'organes de renfort longitudinaux parallèles, positionnés sur les deux zones précitées de la largeur du corps plan de bande. Chaque groupe comporte avantageusement entre deux et six organes de renfort.

Encore de préférence, les organes de renfort longitudinaux sont noyés dans la masse du corps plan, chacun au niveau de la fibre neutre de ce corps plan, c'est-à-dire approximativement au niveau du milieu de son épaisseur.

Selon une autre caractéristique, la bande transporteuse comporte des plots monoblocs en saillie, régulièrement répartis sur sa face de dessous et qui sont organisés par rangées parallèles de deux couples, les plots de chaque couple étant séparés par une zone A de corps plan centrée sur le quart de sa largeur, de part et d'autre de son plan médian.

Dans ce cadre, les organes de renfort ou groupes d'organes de renfort sont avantageusement positionnés sur la zone A du corps plan et centrés sur cette zone A.

L'invention concerne également un convoyeur à bande sans fin comprenant :
- une bande transporteuse sans fin telle que définie ci-dessus,
- deux structures de renvoi d'extrémités dont l'une au moins est motorisée, sur lesquelles s'enroule ladite bande transporteuse sans fin en configuration plane, au moins ladite structure de renvoi motorisée comportant des éléments d'entraînement venant coopérer avec les plots monoblocs qui équipent la face de dessous de ladite bande transporteuse, pour assurer l'entraînement de celle-ci, et
- des moyens pour conformer le brin supérieur de ladite bande transporteuse en configuration transversale tubulaire ou sensiblement tubulaire, avec ses bords longitudinaux relevés et qui viennent s'accoler ou pratiquement s'accoler l'un à l'autre, les deux organes de renfort longitudinaux ou groupes d'organes de renfort longitudinaux de ladite bande transporteuse étant alors positionnés sur le diamètre horizontal de la section transversale de ladite structure tubulaire obtenue, ou sensiblement sur ce diamètre horizontal.

Les moyens pour conformer la bande sans fin en configuration transversale tubulaire ou sensiblement tubulaire se composent avantageusement, au moins en partie, d'organes de guidage longitudinaux (fils, rails, profilés...) contre lesquels vient prendre appui la face inférieure du brin supérieur de la bande transporteuse, lesquels organes de guidage coopèrent avec les plots d'entraînement équipant la face de dessous de ladite bande transporteuse, pour éviter le déplacement latéral de cette dernière.

L'invention sera encore illustrée, sans être aucunement limitée, par la description suivante d'une forme de réalisation particulière, donnée uniquement à titre d'exemple et représentée sur les dessins annexés dans lesquels :
- la figure 1 est une vue en coupe transversale d'une bande transporteuse conforme à l'invention, représentée en configuration plane ;
- la figure 2 montre la bande sans fin de la figure 1 placée en configuration pratiquement tubulaire ;
- la figure 3 est une vue de côté d'une installation de convoyage, en forme de convoyeur élévateur, mettant en oeuvre la bande transporteuse illustrée sur les figures 1 et 2.

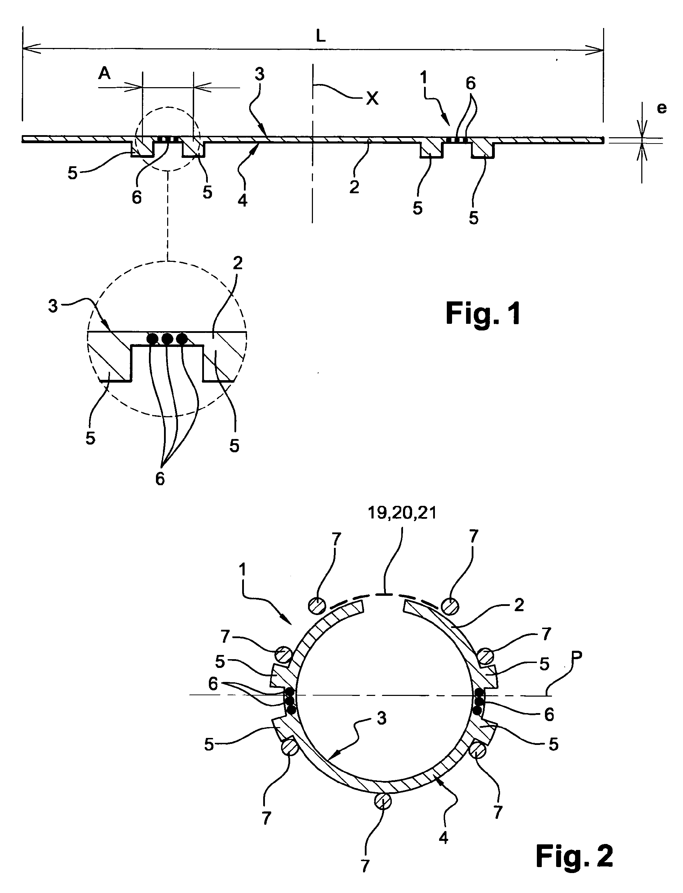

La bande transporteuse 1, illustrée en coupe transversale sur la figure 1, comprend un corps plan 2 réalisé en matière plastique souple, par exemple en élastomère de type polyuréthane. Elle est fabriquée plane par une technique de moulage extrusion.

Le corps plan 2 a une largeur L comprise entre quelques centimètres et quelques dizaines de centimètres. Son épaisseur e est de l'ordre de quelques millimètres et elle présente une symétrie par rapport à son axe médian longitudinal X.

La face de dessus 3 du corps plan 2, destinée à recevoir les produits à transporter, est lisse, dépourvue de protubérances.
Sa face inférieure 4 comporte des plots monoblocs 5 qui sont adaptés pour coopérer avec au moins une structure de renvoi associée, dans l'installation de convoyage, pour assurer l'entrainement de la bande transporteuse 1.

Les plots monoblocs 5 sont ici agencés sur des lignes transversales régulièrement espacées, par exemple de quelques centimètres. Comme illustré sur la figure 1, ils sont au nombre de quatre sur chaque ligne, et ils sont positionnés deux à deux de manière symétrique par rapport à l'axe médian X du corps plan 2.
Chaque couple de plots 5 est approximativement centré sur la demi-largeur de bande. Au sein de chaque couple, les plots monoblocs 5 sont espacés d'une distance A l'un de l'autre.

La bande transporteuse 1 comprend également des organes de renfort longitudinaux 6, en forme de câbles ou de sangles plates, adaptés pour limiter ses possibilités d'allongement longitudinal.

Ces organes de renfort 6, réalisés par exemple en fibre d'aramide ou fil d'acier, sont intégrés dans la masse lors de la fabrication de la bande 1, au niveau du milieu de son épaisseur e, c'est-à-dire sur la fibre neutre du corps plan 2.

Conformément à la présente invention, ces organes de renfort 6 sont positionnés sur deux zones de la largeur L du corps plan 2 qui sont situées au quart ou approximativement au quart de cette largeur L, de part et d'autre du plan médian X (c'est-à-dire approximativement centrées sur la demi-largeur du corps plan 2).

Un organe de renfort 6 peut être présent sur chaque zone correspondante (en forme de câble ou de sangle plate). De préférence, en particulier si on utilise des câbles, on prévoit deux groupes d'une pluralité d'organes de renfort 6 (avantageusement entre deux et six organes par groupe).
Ces groupes d'organes de renfort 6 sont chacun positionnés sur une zone étroite de la largeur du corps plan 2, par exemple sur une zone de 2 à 5 mm de large.

Dans le mode de réalisation illustré sur la figure 1, les groupes d'organes de renfort 6 sont positionnés sur la zone A du corps plan 2, entre les couples de plots 5, et centrés sur cette zone A.
Ils consistent ici en des câbles, au nombre de trois dans chaque groupe. Les câbles en question consistent avantageusement en des câbles de fibre d'aramide ayant une section dont le diamètre est compris entre 0,5 et 1,5 mm.

Cette structure de bande transporteuse 1 est naturellement à l'état plan, mais, de par sa souplesse transversale, elle peut être conformée en auge ou, de manière plus poussée, être mise en configuration transversale tubulaire ou pratiquement tubulaire, avec ses bords longitudinaux relevés qui viennent s'accoler ou pratiquement s'accoler l'un à l'autre, comme illustré sur la figure 2.
Les deux bords longitudinaux de la bande 1 sont relevés de la même manière pour obtenir une structure symétrique par rapport à son plan médian vertical.

Dans le cadre d'une telle configuration transversale tubulaire, l'axe médian de la bande 1 est maintenu dans le plan vertical du tube et les organes de renfort longitudinaux 6 sont alors positionnés sur le diamètre horizontal P de la section transversale du tube (voir figure 2), ce qui permet de limiter au maximum les contraintes internes de la structure de transport, en particulier lorsque cette structure se déplace selon des trajectoires non rectilignes (angle ou courbe), ceci dans un plan perpendiculaire aux axes des rouleaux d'extrémités de la structure de convoyage équipée.

Sur la figure 2, on a représenté cette mise en configuration transversale pratiquement tubulaire de la bande de transport 1, maintenue au moyen d'organes de guidage longitudinaux 7 convenablement agencés.
Ces organes longitudinaux de guidage 7 peuvent consister en des fils métalliques à section ronde (comme illustré sur la figure 2) ; il peut aussi s'agir de rails ou de profilés en matière métallique ou plastique, par exemple en PEHD.
On remarque ici que certains des organes de guidage 7 viennent prendre appui sur les côtés des plots monoblocs 15, pour éviter le déplacement latéral (ou en rotation) de la bande sans fin 1, lorsqu'elle se déplace.

Cette configuration transversale tubulaire peut être mise en oeuvre par exemple dans le cadre de convoyeurs élévateurs pour optimiser le transport des produits ou de la matière, en particulier au niveau du ou des tronçons ascendants.

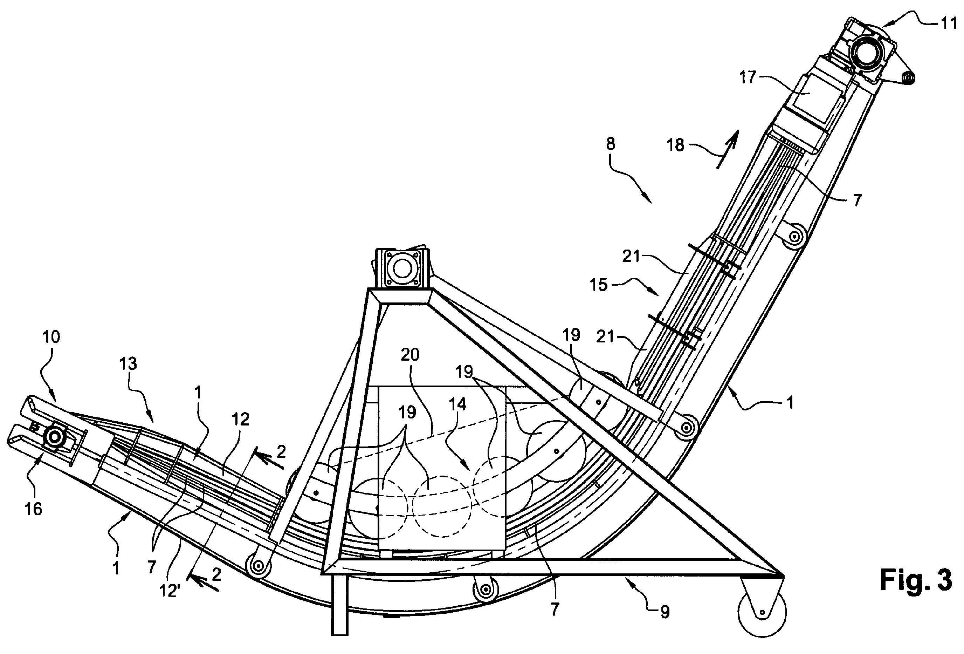

Un convoyeur élévateur 8 de ce type est représenté sur la figure 3 ;

Ce convoyeur élévateur 8 comprend un châssis 9 équipé de la bande transporteuse sans fin 1 qui s'enroule en configuration plane autour - d'une structure de renvoi inférieure amont 10 et - d'une structure de renvoi supérieure aval 11, toutes deux en forme de rouleaux d'extrémités.

La bande sans fin 1 comporte - un brin supérieur 12 dont la face supérieure constitue la surface de transport des produits, et - un brin inférieur 12', formant brin retour.

Le brin supérieur 12 de la bande sans fin 1 est guidé par le châssis 2 de sorte à définir, partant du rouleau amont 10, un tronçon rectiligne de chargement 13 pour les produits transportés, suivi d'un tronçon courbe concave 14, suivi lui-même d'un tronçon ascendant rectiligne 15 qui aboutit au rouleau d'extrémité amont 11.

Le convoyeur élévateur 8 comporte des moyens classiques 16 qui permettent de mettre en tension ou de détendre la bande sans fin 1, ménagés ici au niveau du rouleau amont 10.

Le rouleau aval 11 est associé à une motorisation 17 qui permet sa mise en rotation afin d'assurer l'entraînement de la bande sans fin 1 dans le sens de la flèche directionnelle 18.

Au niveau des rouleaux d'extrémités 10 et 11, la bande sans fin 1 présente une configuration transversale plane ou sensiblement plane, tel que représenté sur la figure 1. En revanche, entre ses extrémités amont 10 et aval 11, le convoyeur élévateur 8 est structuré pour conformer la bande transporteuse 1 en configuration recourbée et plus particulièrement en configuration tubulaire, au moins sur une partie du tronçon ascendant 15 (et de préférence sur une partie au moins du tronçon courbe 14 et sur la majeure partie du tronçon ascendant 15), mettant alors à profit ses caractéristiques de souplesse transversale, afin d'optimiser le transport ascendant des produits.

Au niveau du tronçon de chargement 13, la bande sans fin 1 présente une configuration plane, adaptée pour permettre la dépose des produits, par exemple par l'intermédiaire d'une trémie (non représentée).
Ce tronçon de chargement 13 peut être structuré en pente descendante, comme illustré sur la figure 3 ; dans des variantes de réalisation, la pente descendante correspondante peut être moins prononcée. Le tronçon de chargement 13 peut aussi s'étendre horizontalement ou en légère pente ascendante, cela en particulier en fonction de la nature des produits à transporter.

La mise en configuration recourbée de la bande sans fin 1, avec ses bordures longitudinales relevées l'une vers l'autre, est initiée au niveau du tronçon de chargement 13, ou juste à la suite de celui-ci, au moyen des organes longitudinaux de guidage 7 précités, qui viennent prendre appui contre la face inférieure 4 de ladite bande sans fin 1 (figure 2).

Dans le mode de réalisation illustré, la configuration tubulaire de la bande sans fin 1 est obtenue approximativement à la fin du tronçon de chargement 13, c'est-à-dire approximativement à l'entrée du tronçon courbe 14, et elle s'étend le plus haut possible sur le tronçon ascendant 15, c'est-à-dire juste avant l'extrémité aval 11. La section de bande illustrée sur la figure 2 peut correspondre à la coupe 2-2 de la figure 3.
En amont de la configuration tubulaire complète, les organes de guidage 7 déforment progressivement la bande sans fin 1 pour passer de la configuration transversale plane (au niveau du rouleau d'extrémité 10) vers la configuration tubulaire (en préservant un espace adapté pour le chargement des produits).
En aval de la configuration tubulaire complète, les organes de guidage 7 déforment progressivement la bande sans fin 1 pour passer de ladite configuration tubulaire vers une configuration plane (au niveau du rouleau d'extrémité 11).

La configuration tubulaire de convoyage peut être obtenue par les organes de guidage 7 seuls.
Néanmoins, de préférence, ces organes de guidage 7 sont associés à des moyens complémentaires (schématisés et repérés 19, 20, 21 sur la figure 2), adaptés pour maintenir les bords longitudinaux de la bande sans fin accolés ou pratiquement accolés, afin d'obtenir ou de renforcer l'étanchéité au niveau de la génératrice supérieure du tube obtenu.

Au niveau du tronçon courbe 14 du convoyeur élévateur 8, ces moyens complémentaires comprennent ici un ensemble de galets 19 montés libres en rotation et juxtaposés sur une ligne en arc de cercle, au-dessus du tube de convoyage 1. Ces galets 19 ont une surface active à section en arc de cercle concave, complémentaires de la section tubulaire de bande ; ils sont répartis les uns à la suite des autres de sorte à venir en contact avec la partie tubulaire de bande sans fin 1, au niveau de la ligne de jonction de ses bords accolés ou pratiquement accolés.
Pour obtenir un appui continu et optimiser l'étanchéité, la juxtaposition de galets 19 est avantageusement associée à une bande sans fin souple 20 qui les ceinture. Le brin supérieur (non actif) de cette bande sans fin 20 apparaît sur la figure 3. Son brin inférieur vient s'appliquer en continu sur le tube de convoyage 1 pour assurer l'étanchéité recherchée. Il avance à la même vitesse ou sensiblement à la même vitesse que le tube de convoyage 1, entraîné par ce dernier.

Au niveau du tronçon ascendant rectiligne 15 du convoyeur élévateur 8, les moyens complémentaires de maintien des bords longitudinaux de la bande sans fin accolés ou pratiquement accolés, consistent en des patins d'appui fixe 21, dont la surface active est à section en arc de cercle concave, complémentaire de la section supérieure du tube de convoyage.

Dans les zones de présence des moyens complémentaires 19-20 ; 21 qui viennent appuyer sur la partie supérieure du tube de convoyage 1, les organes de guidage longitudinaux 7 peuvent être prévus uniquement pour guider la partie inférieure et éventuellement les parties latérales dudit tube de convoyage 1.

Au niveau du tronçon courbe 14 du convoyeur élévateur, on peut encore prévoir des moyens en forme de rails d'appui latéraux et/ou en forme d'organe(s) de traction inférieur(s), adaptés pour éviter l'écrasement sur lui-même du tube de convoyage 1.
Cet écrasement peut aussi être limité ou évité, par un choix judicieux de la nature de la bande sans fin 1 et de son épaisseur.

Partant de la structure de convoyeur élévateur 8 décrite ci-dessus, la bande transporteuse sans fin 1 étant entraînée par le tambour motorisé 11, les produits peuvent être déposés sur le tronçon de chargement 13. Ils sont ensuite canalisés progressivement dans la partie tubulaire du tronçon courbe 14 ; ils s'accumulent dans la partie amont du tronçon ascendant 15 et ils sont transportés vers le haut jusqu'à la partie aval du convoyeur, sous l'effet du mouvement de la bande 1, de sa conformation en tube et de la poussée des produits amont.
Arrivant au niveau de la structure de renvoi aval 11, les produits sont récupérés par toute structure adaptée, tel qu'une trémie de réception, un convoyeur de transport, une goulotte de sortie ou autre.

Une telle structure de convoyeur élévateur s'avère très simple et particulièrement efficace ; la pente du tronçon ascendant 15 peut atteindre 60, 80, voire même 100 %, ce qui lui confère des caractéristiques de compacité très intéressantes. La bande sans fin 1 ayant une surface supérieure 3 lisse, elle peut facilement être nettoyée, par exemple par des moyens de raclage ménagés au niveau d'une partie à configuration plane (par exemple au niveau de ses extrémités ou de son brin inférieur retour 12').
En outre, le positionnement particulier des organes de renfort 6 évite toute contrainte interne sur la structure de la bande sans fin configurée en tube, en particulier au niveau du tronçon courbe 14, lorsque le plan médian vertical du tube est maintenu sur l'axe médian de la bande.

Ce genre de convoyeur élévateur peut efficacement être utilisé pour le transfert vers le haut de produits en vrac se présentant en portions, morceaux, languettes, grains, poudre ... Il trouve une application en particulier pour les produits alimentaires tels que de la viande en morceaux, du fromage ou légumes râpés, des poissons entiers ou en morceaux.

## Revendications

1. Bande transporteuse sans fin pour dispositif convoyeur, laquelle bande transporteuse (1), réalisée plane en matériau souple, comprend un corps plan (2) de largeur L, de plan médian longitudinal X et d'épaisseur e, dont la face de dessus (3) est destinée à recevoir un produit à transporter, lequel corps plan (2) intègre dans son épaisseur e une pluralité d'organes de renfort longitudinaux (6), de type câbles, sangles plates ou autres, adaptés pour limiter ses possibilités d'allongement longitudinal, **caractérisée en ce que** lesdits organes de renfort (6) sont positionnés uniquement sur deux zones de la largeur L dudit corps plan (2), situées à 1/4 ou approximativement à 1/4 de ladite largeur L, de part et d'autre dudit plan médian X.

2. Bande transporteuse selon la revendication 1, **caractérisée en ce qu'**elle comprend deux groupes d'une pluralité d'organes de renfort longitudinaux parallèles (6), positionnés sur les deux zones de la largeur L du corps plan (2) situées à 1/4 ou approximativement à 1/4 de ladite largeur L de part et d'autre du plan médian X.

3. Bande transporteuse selon la revendication 2, **caractérisée en ce que** chaque groupe d'organes de renfort longitudinaux (6) comporte entre deux et six organes de renfort (6).

4. Bande transporteuse selon l'une quelconque des revendications 1 à 3, **caractérisée en ce que** les organes de renfort longitudinaux (6) sont noyés dans la masse du corps plan (2), chacun au niveau de la fibre neutre dudit corps plan (2), c'est-à-dire approximativement au niveau du milieu de son épaisseur e.

5. Bande transporteuse selon l'une quelconque des revendications 1 à 4, **caractérisée en ce qu'**elle comprend des plots monoblocs (5) en saillie, régulièrement répartis sur sa face de dessous (4) et qui sont organisés par rangées parallèles de deux couples, les plots (5) de chaque couple étant séparés par une zone A de corps plan (2) centrée sur le 1/4 de sa largeur L de part et d'autre du plan médian X.

6. Bande transporteuse selon la revendication 5, **caractérisée en ce que** les organes de renfort ou les groupes d'organes de renfort (6) sont positionnés sur la zone A du corps plan (2) et centrés sur ladite zone A.

7. Dispositif convoyeur comprenant :
- une bande transporteuse sans fin (1) selon l'une quelconque des revendications 1 à 6,
- deux structures de renvoi d'extrémité (10 et 11) dont l'une au moins est motorisée, sur lesquelles s'enroule ladite bande transporteuse sans fin (1), en configuration plane, au moins ladite structure de renvoi motorisée (11) comportant des éléments d'entraînement venant coopérer avec des plots monoblocs (5) qui équipent la face de dessous (4) de ladite bande transporteuse (1), pour assurer l'entraînement de celle-ci,
- des moyens (19,20,21) pour conformer le brin supérieur de ladite bande transporteuse (1) en configuration transversale tubulaire, ou sensiblement tubulaire, avec ses bords longitudinaux relevés et qui viennent s'accoler ou pratiquement s'accoler l'un à l'autre, les deux organes de renfort longitudinaux (6) ou groupes d'organes de renfort (6) de ladite bande transporteuse (1) étant alors positionnés sur le diamètre horizontal P de la section transversale de ladite structure tubulaire obtenue (1), ou sensiblement sur ce diamètre horizontal.

8. Convoyeur selon la revendication 7, **caractérisé en ce que** les moyens pour conformer la bande sans fin (1) en configuration transversale tubulaire ou sensiblement tubulaire se composent, au moins en partie, d'organes de guidage longitudinaux (7) contre lesquels vient prendre appui la face inférieure (4) du brin supérieur de ladite bande transporteuse (1), lesquels organes de guidage (7) coopèrent avec les plots d'entraînement (5) équipant la face de dessous (4) de ladite bande transporteuse (1) pour éviter le déplacement latéral de ladite bande sans fin (1).

## Claims

1. An endless carrier belt for a conveyor device, said carrier belt (1), in a flat form from a flexible material, comprises a flat body (2) of width L, longitudinal central plane X and thickness e, the bottom face (3) of which is intended to receive product to be carried, said flat body (2) integrating in its thickness e a plurality of longitudinal reinforcing members (6), such as cables, flat straps, or the like, adapted to restrict the longitudinal extension possibilities thereof, **characterized in that** said reinforcing members (6) are positioned only in two areas of the width L of said flat body (2), located at 1/4 or approximately 1/4 of said width L, on either side of said central plane X.

2. A carrier belt according to claim 1, **characterized in that** it comprises two of a plurality of parallel longitudinal reinforcing members (6), in the two of the width L of the flat body (2) located at 1/4 or approximately 1/4 of said width L on either side of said central plane X.

3. A carrier belt according to claim 2, **characterized in that** each group of longitudinal reinforcing members (6) comprise between two and six reinforcing members (6).

4. A carrier belt according to any one of claims 1 to 3, **characterized in that** the longitudinal reinforcing members (6) are embedded in the of the flat body (2), each at the neutral fibre of said flat body (2), i.e. in the middle of its thickness e.

5. A carrier belt according to any one of claims 1 to 4, **characterized in that** it comprises protruding single-piece studs (5), regularly distributed over the bottom face (4) thereof and arranged in parallel rows of two couples, the studs (5) of each couple in separated from each other by an area A of the flat body (2) centred on the 1/4 of its width L on either side of the central plane X.

6. A carrier belt according to claim 5, **characterized in that** the reinforcing members or the groups of reinforcing members (6) are positioned in the area A of the flat body (2) and centred on said area A.

7. Conveyor device comprising:
- an endless carrier belt (1) according to any of claims 1 to 6,
- two end transmission structures (10 and 11), one at least of which is motorized, and on of which endless carrier belt (1) is rolled in a flat configuration, at least said motorized transmission structure (11) comprising driving that cooperate with single-piece studs (5) provided on the bottom face (4) of said carrier belt (1), to the latter,
- means (19, 20; 21) for shaping the upper strand of said carrier belt (1) into a tubular or substantially tubular transverse configuration, with the longitudinal edges raised up and coming side by side or practically side by side with each other, the two longitudinal reinforcing members (6) or of longitudinal reinforcing members (6) of said carrier belt (1) being then positioned on the horizontal 1 diameter P of the section of said tubular structure (1) obtained, or substantially on this horizontal diameter.

8. Conveyor according to claim 7, **characterized in that** the for shaping the endless belt (1) into a tubular or substantially tubular transverse configuration are comprised, at least in part, of longitudinal guiding members (7) which rests the lower face (4) of the upper strand of said carrier belt (1), said guiding members (7) cooperating with the driving studs (5) provided on the bottom face (4) of said carrier belt (1), to the lateral displacement of said endless belt (1).

## Patentansprüche

1. Endlosträgerband für ein Fördersystem, wobei das Trägerband (1), das flach aus einem biegsamen Material ausgeführt ist, einen flachen Körper (2) mit der Länge L, der Löngsmittelebene X und der Dicke e umfasst, dessen Oberseite (3) dazu bestimmt ist, ein zu beförderndes Produkt aufzunehmen, wobei der Körper (2) in seiner Dicke e eine Vielzahl von Lüngsverstürkungselementen (6) vom Typ Kabel, Flachgurte oder dergleichen umfasst, die dazu geeignet sind, seine Möglichkeiten der Längsausdehnung zu begrenzen, **dadurch gekennzeichnet, dass** die Verstörkungselemente (6) nur auf zwei Zonen der Breite L des flachen Körpers (2) positioniert sind, die auf ¼ oder annähernd ¼ der Breite L beiderseits der Mittelebene X angeordnet sind.

2. Trägerband nach Anspruch 1, **dadurch gekennzeichnet, dass** es zwei Gruppen mit einer Vielzahl von parallelen Lüngsverstärkungselementen (6) umfasst, die auf den beiden Zonen der Breite L des flachen Körpers (2), die auf ¼ oder annähernd ¼ der Breite L beiderseits der Mittelebene X angeordnet sind, umfasst.

3. Trägerband nach Anspruch 2, **dadurch gekennzeichnet, dass** jede Gruppe von Längsverstürkungselementen (6) zwischen zwei und sechs Verstärkungselemente (6) umfasst.

4. Trägerband nach einem der Ansprüche 1 bis 3, **dadurch gekennzeichnet, dass** die Längsverstürkungselemente (6) in die Masse des flachen Körpers (2) jeweils im Bereich der Neutralfaser des flachen Körpers (2), d.h. annähernd im Bereich der Mitte seiner Dicke e, eingelassen sind.

5. Trägerband nach einem der Ansprüche 1 bis 4, **dadurch gekennzeichnet, dass** es vorspringende einstückige Klötze (5) umfasst, die regelmäßig auf seiner Unterseite (4) verteilt und in parallelen Reihen zu zwei Paaren angeordnet sind, wobei die Klötze (5) jedes Paars durch eine Zone A des flachen Körpers (2) getrennt sind, die auf ¼ seiner Breite L beiderseits der Mittelebene X zentriert ist.

6. Trägerband nach Anspruch 5, **dadurch gekennzeichnet, dass** die Verstärkungselemente oder die Gruppen von Verstärkungselementen (6) auf der Zone A des flachen Körpers (2) angeordnet und auf der Zone A zentriert sind.

7. Fördersystem, umfassend:
- ein Endlostrügerband (1) nach eine der Ansprüche 1 bis 6,
- zwei Endumlenkstrukturen (10 und 11), von denen mindestens eine motorbetrieben ist, auf die das Endloströgerband (1) in flacher Ausführung aufgewickelt wird, wobei mindestens die motorbetriebene Umlenkstruktur (11) Antriebselemente umfasst, die mit einstückigen Klötzen (5) zusammenwirken, mit denen die Unterseite (4) des Trägerbandes (1) versehen ist, um den Antrieb desselben zu gewährleisten,
- Mittel (19, 20, 21), um den oberen Abschnitt des Trägerbandes (1) in eine röhrenförmige oder im Wesentlichen röhrenförmige Querausführung zu bringen, wobei seine Längsränder angehoben sind und sich aneinander fügen oder praktisch aneinander fügen, wobei die beiden Löngsverstärkungselemente (6) oder Gruppen von Verstärkungselementen (6) des Trägerbandes (1) nun auf dem Horizontaldurchmesser P des Querschnitts der erhaltenen röhrenförmigen Struktur (1) oder im Wesentlichen auf diesem Horizontaldurchmesser angeordnet sind.

8. Fördersystem nach Anspruch 7, **dadurch gekennzeichnet, dass** die Mittel, um das Endlosband (1) in eine röhrenförmige oder im Wesentlichen röhrenförmige Querausführung zu bringen, mindestens teilweise aus Löngsführungselementen (7) bestehen, an denen die Unterseite (4) des oberen Abschnitts des Trägerbandes (1) zur Anlage gelangt, wobei die Führungselemente (7) mit den Antriebsklötzen (5), mit denen die Unterseite (4) des Trägerbandes (1) versehen ist, zusammenwirken, um die seitliche Verschiebung des Endlosbandes (1) zu vermeiden.
